# EUROPÄISCHE PATENTSCHRIFT

(11) **EP 1 420 172 B1**
(45) Veröffentlichungstag und Bekanntmachung des Hinweises auf die Patenterteilung: **03.09.2008**
(21) Anmeldenummer: 02025752.3
(22) Anmeldetag: 15.11.2002
(51) Int. Cl.: F16B 7/04

(54) **Verfahren zum Positionieren einer Klemmeinrichtung an einer Tragstange bei einem Roboter**
Method for positioning clamping means on the profiled beam of a robot
Méthode pour positionner une bague de serrage sur la poutre profilée d'un robot

(43) Veröffentlichungstag der Anmeldung: 19.05.2004
(73) Patentinhaber: NORGREN Automotive GmbH, 64569 Nauheim (DE)
(72) Erfinder: Oerder, Markus, 61479 Glashütten (DE)
(74) Vertreter: Quermann, Helmut

(56) Entgegenhaltungen:
- EP-A- 1 041 295
- EP-A- 1 136 195
- PATENT ABSTRACTS OF JAPAN vol. 015, no. 053 (M-1079), 7. Februar 1991 (1991-02-07) -& JP 02 284898 A (SHINKO ELECTRIC CO LTD), 22. November 1990 (1990-11-22)

## Beschreibung

Die Erfindung betrifft ein Verfahren zum Positionieren einer Klemmeinrichtung einer Tragstange bei einem Roboter, wobei die gelöste Klemmeinrichtung relativ zur Tragstange in deren Längsrichtung verschiebbar und in einer bestimmten Stellung mit der Tragstange verspannbar ist, sowie ein Meßsystem zum Erfassen diverser Stellungen von Klemmeinrichtung und Tragstange vorgesehen ist.

Bei Robotern, insbesondere solchen, die in der Kraftfahrzeugindustrie Verwendung finden, werden beispielsweise Greifersysteme benötigt, um im Rohbau die Bauteile zu handhaben. Die Greifersysteme werden dazu als eine Art Hand am Roboter befestigt und führen unterschiedliche Funktionen aus, insbesondere ein Bauteilhandling von einem Ort A zu einem Ort B, Bauteilhandling einschließlich leichter Funktionen, wie Klebeauftrag, Bauteilhandling einschließlich Ausschweißen, oder die Funktion von Geometriegreifern, in denen die Geometrie der Bauteile zueinander im Greifer hergestellt wird.

Grundsätzlich werden die Greifer konstruiert und RobCad untersucht. Dies bedeutet, dass der jeweilige Greifer grundsätzlich in der Produktion ohne Anpassung funktionsfähig ist. Der Greifer wird nach Konstruktion montiert und es werden die einzelnen Klemmverbindungen sowie die die Bauteile haltenden Spannpunkte mit einem Meßgerät laut den Meßpunkten der Konstruktion auf ca. 0,3 mm eingemessen.

In der Vergangenheit wurden die Greifersysteme aus Stahlkomponenten geschweißt. Diese Greifer hatten eine exakte Position, die nicht verändert werden konnte. Heute werden die Greifer überwiegend aus modularen Standardkomponenten zusammengesetzt. Die Position kann verändert werden.

Bezüglich der Greifersysteme gibt es unterschiedliche Anforderungen, die grundlegend unterschiedliche Ausführungen nötig machen.

Die Praxis zeigt, dass die RobCad untersuchten Greifer, entgegen der Theorie, in der Praxis oft nicht passen. Daher hat sich der modulare Greifer durchgesetzt, da dieser flexibel in der Anlage den Gegebenheiten angepasst werden kann. Die geschweißten Greifer führen aufgrund der starren Ausführungen zu großen Problemen. Dieselbe Problemstellung ergibt sich bei Änderungen infolge Crashsituationen im Prozeß.

Als Nachteil der flexiblen Ausführung ergibt sich die Situation, dass jeder am Roboter Arbeitende die Position der Greifer einfach verändern kann. Je nach Arbeiter ergeben sich, aufgrund dessen Art Einstellungen vorzunehmen, positive oder negative Auswirkungen.

Bei der Reparatur oder dem Nachbau eines Greifers in der Werkstatt muss eine exakte Reproduktion sichergestellt werden, ohne entsprechende Musterbauteile zum Einstellen zu nutzen. Dies ist bei flexiblen Systemen kaum möglich.

Aus der Praxis ist es bekannt Stahlkomponenten mit definierten Klemmaufnahmen vorzusehen. Das System ist dadurch eindeutig zu definieren, aber in der Anlage auch sehr unflexibel.

Ein Verfahren zum Positionieren einer Klemmeinrichtung an einer Tragstange bei einem Roboter gemäß dem Oberbegriff des Patentanspruchs 1 ist aus der EP 1 136 195 A1 bekannt. Dort weist die Tragstange eine Vielzahl von gleichmäßig beabstandeten Markierungen in Form von ringförmigen Nuten auf, die ein Maß für die mit der Tragstange zu verbindende Klemmeinrichtung sind. Mit Hilfe der Markierungen kann eine exakte Positionierung von Klemmeinrichtung und Tragstange erreicht werden und damit eine exakte Positionierung eines von der Klemmeinrichtung aufgenommenen Werkzeugs, Werkstücks oder Meßgeräts.

Ein Verfahren zum Positionieren einer Klemmeinrichtung an einer Tragstange bei einem Roboter gemäß dem Oberbegriff des Patentanspruches 1 ist aus der EP 1041295 A1 bekannt. Dort weist die Tragstange eine mit dieser verbindbare Justierleiste auf, die der Positionierung des Klemmstückes dient. Sowohl die Justierleiste, als auch das Klemmstück weisen Justierbohrungen auf, zur Aufnahme eines Justierstiftes in der miteinander fluchtenden Position der Justierbohrungen. - Bei diesem bekannten Verfahren lässt sich somit eine einzige definierte Position zwischen Klemmeinrichtung und Justierleiste erzielen. Da die Justierleiste keine Verbindung mit dem Klemmelement hat und nicht verschoben wird, ist zwar immer eine genaue Positionierung möglich. Eine abweichende Position kann jedoch nicht dargestellt und auch nicht in der Anlage dokumentiert werden.

Bei starren Greifern besteht der Vorteil, dass die eindeutige vermessene Position vorhanden ist. Insofern kann eindeutig überprüft werden, ob der Lieferant die Greifer entsprechend der Konstruktion angefertigt und geliefert hat.

Die Produktion der Fahrzeuge wird immer hochwertiger und genauer. Da die Betreiber mit immer genaueren Toleranzen, z.B. das berühmte Spaltmaß, konfrontiert werden, müssen die Fertigungssysteme diesen Anforderungen gerecht werden. Flexible Systeme, die keine definierten Toleranzvorgaben enthalten, widersprechen der Entwicklung, egal ob das letztendliche Ergebnis gut oder schlecht ist. Dies bedeutet, dass in aktuellen Projekten verstärkt Systeme eingesetzt werden, die eine eindeutige Position sicherstellen können. Bei einer Problemanalyse ist es notwendig zu wissen, welche Ausgangssituation bestanden hat. Das ist bei undefinierten, also flexiblen Lösungen, nicht der Fall,

Ein weiterführendes Problem ist die Dokumentation der Greifer. Die Änderungen, die in den Anlagen vorgenommen werden, werden oft nicht festgehalten und die Dokumentation stimmt nicht mit der Praxis überein. In der Praxis wird angestrebt, die Greifer regelmäßig gegen Ersatzgreifer auszutauschen und in der Werkstatt zu vermessen. Die Daten werden in einem Meßprotokoll festgehalten. Diese Vorgehensweise ist sehr kosten- und zeitaufwendig sowie aufgrund der hohen Auslastung der Anlagen kaum durchzusetzen.

Speziell bei den Inbetriebnahmen der Greifer werden viele Änderungen durchgeführt, die in den Dokumentationen vor Übergabe an die Betreiber nicht eingearbeitet werden können, da dazu ein Vermessen der Greifer notwendig wäre. Dies ist aus Zeitgründen oft nicht möglich. Das bedeutet, dass die Konstruktion bereits bei Produktionsbeginn nicht mit der tatsächlichen Ausführung übereinstimmt und auch ein entsprechender Ersatzgreifer nicht identisch mit dem Prozessgreifer ist.

Es ist Aufgabe der vorliegenden Erfindung bei einem modularen System die vorbezeichneten Nachteile beim Positionieren von Klemmeinrichtung und Tragstange zu vermeiden. Es soll insbesondere ein kostengünstiges, einfach anwendbares Positionieren von Klemmeinrichtung und Tragstange möglich sein. Es soll auf ein aufwendig und kostspieliges Vermessen dieser Teile des Roboterhandlingsystems verzichtet werden können.

Gelöst wird die Aufgabe bei einem Verfahren gemäß dem Oberbegriff des Patentanspruches 1 dadurch, dass das Einmessen und/oder Abfragen der Position von Tragstange und Klemmeinrichtung elektronisch erfolgt.

Dieses Meßsystem ermöglicht es, unterschiedliche Verschiebestellungen von Klemmstück und Tragstange zu erfassen. Die erste Verschiebestellung von Klemmstück und Tragstange entspricht beispielsweise der Sollstellung gemäß Konstruktion und RobCad-Untersuchung. Ist, aufgrund der Ist-Verhältnisse das Klemmstück in einer demgegenüber verschobenen Stellung relativ zur Tragstange zu positionieren, lässt sich diese Stellung mittels des Meßsystems einfach erfassen und reproduzieren bzw. dokumentieren. Das Klemmstück wird entsprechend der Vorgabe des Meßsystems aus der Soll-Position verschoben bzw. in dieser Soll-Position unmittelbar montiert.

Das Meßsystem kann in unterschiedlichster Art und Weise ausgeführt sein und dementsprechend unterschiedlich die Messung herbeiführen.

So wird es als vorteilhaft angesehen, wenn das Meßsystem die relativen Stellungen von Klemmeinrichtung und Tragstange kontaktlos erfasst. Mechanische Elemente, wie beispielsweise ein Justierstift beim erörteten Stand der Technik sind demzufolge nicht vorgesehen. Als besonders zweckmäßig wird es angesehen, mittels des Meßsystems die Absolutposition von Klemmeinrichtung und Tragstange oder die Position von einem im System von Klemmeinrichtung und Tragstange eingemessenen Target zu ermitteln. Die Absolutposition wird beispielsweise durch einen definierten Koordinatenpunkt von Klemmeinrichtung und Tragstange bestimmt, beispielsweise einen Nullpunkt gemäß einer diese Bauteile betreffenden Zeichnung. Die Ermittlungen der Position des eingemessenen Target hingegen bezieht sich auf die unmittelbare Position von Klemmeinrichtung und Tragstange zueinander, unter Berücksichtigung des eingemessenen Target. Bei diesem Target kann es sich beispielsweise um eine Justierleiste handeln, die mit der Tragstange verbunden ist. In diesem Fall ermittelt das Meßsystem die Position der Klemmeinrichtung relativ zum Target, jeweils bezüglich der Längserstreckung der Tragstange, da es auf die Orientierung der Klemmeinrichtung relativ zur Längserstreckung der Tragstange ankommt.

Als besonders vorteilhaft wird es angesehen, wenn die Position von Klemmeinrichtung und Tragstange, gegebenenfalls unter Berücksichtigung des Target, mittels einer elektronischen Meßeinheit ermittelt und/oder abgefragt wird. Diese elektrische Arbeitsweise hat den Vorteil, dass Daten unmittelbar speicherbar und reproduzierbar sind:
Grundprinzip ist eine elektronische Meßeinheit mit Display. Diese Einheit wird beispielsweise auf die Klemmeinrichtung aufgesetzt und mißt die Position. Die Daten können individuell über eine Schnittstelle an einen Computer oder dergleichen übermittelt und verarbeitet werden. Somit ergibt sich ein modularer Baukasten mit flexiblen Eigenschaften. Mit Hilfe des Meßmittels kann der Aufbau des Systems, insbesondere der Greiferaufbau, exakt bestimmt und mittels einer Auswertung über Computer die Ist-Position der Klemmeinrichtung bzw. des Greifers dokumentiert werden. Es kann sogar das aufwendige und kostspielige Vermessen der Greifer in einer externen Werkstatt übernommen werden.

Die Verwendung einer elektronischen Meßeinheit ermöglicht damit die elektronische Abfrage der Position der Klemmeinrichtung sowohl als Absolutposition, als auch im Bezug zu dem im System eingemessenen Target. Die Absolutposition bzw. Abweichung vom Target kann in einem Auswertegerät angezeigt und verarbeitet werden. Bei der elektronischen Ausführung besteht zudem die Möglichkeit, durch eine im Target oder in der Klemmeinrichtung integrierte Einheit den Klemmpunkt zu definieren, sowie die laut Konstruktion definierte Absolutposition zu ermitteln. Die elektronische Ausführung ist als eine Art Meßinstrument anzusehen, mit der die Klemmeinrichtung auf eine vordefinierte Position eingestellt, die Abweichung zu einer vordefinierten Position dokumentiert, die Absolutposition der Klemmeinrichtung bestimmt werden kann, zudem diese Daten als Meßdaten verarbeitet werden können und zu einem Meß- und Abweichungsprotokoll verarbeitet werden können, die ein weiteres Vermessen unnötig macht.

Bei dieser Ausführung kann die Klemmeinrichtung und damit insbesondere der Greifer in der Anlage flexibel eingestellt werden, parallel hierzu können sofort die Positionen definiert und dokumentiert werden. Die Daten können festgehalten werden, so dass eine exakte Reproduktion problemlos ausgeführt werden kann.

Die Erfindung gestattet einen modularen Baukasten mit flexibel einstellbaren Komponenten zu schaffen, womit in der Anlage auf Änderungen und Crashsituationen schnell reagiert werden kann. Es ist eine Bestimmung der Position, des weiteren eine exakte Reproduktion innerhalb und außerhalb der Anlage möglich. Der Ist-Zustand der Klemmposition kann ohne weiteres festgestellt und in der Anlage, insbesondere im Zusammenhang mit der Position des Greifers, dokumentiert werden. Der Meßaufwand ist gegenüber dem Stand der Technik erheblich vermindert. Auch die Toleranzen im System sind vermindert.

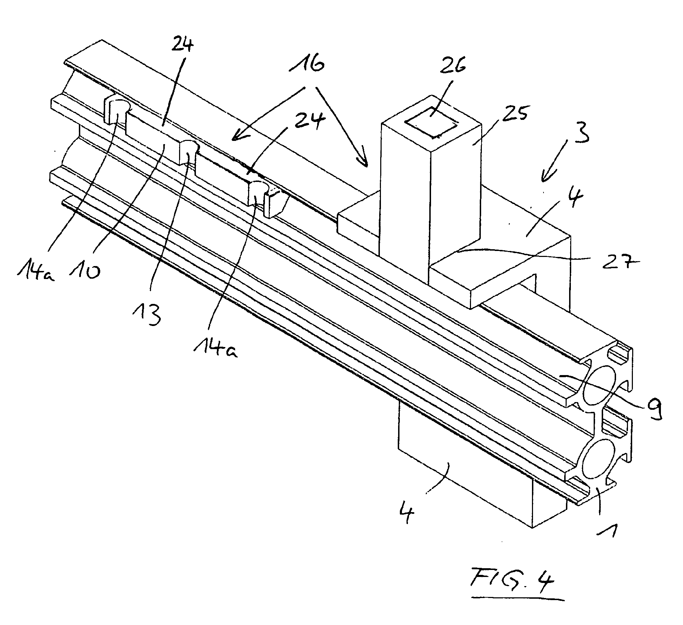

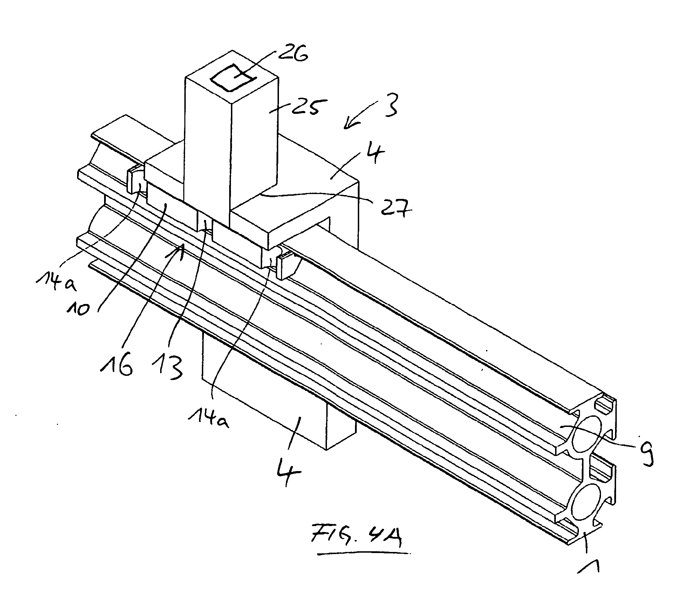

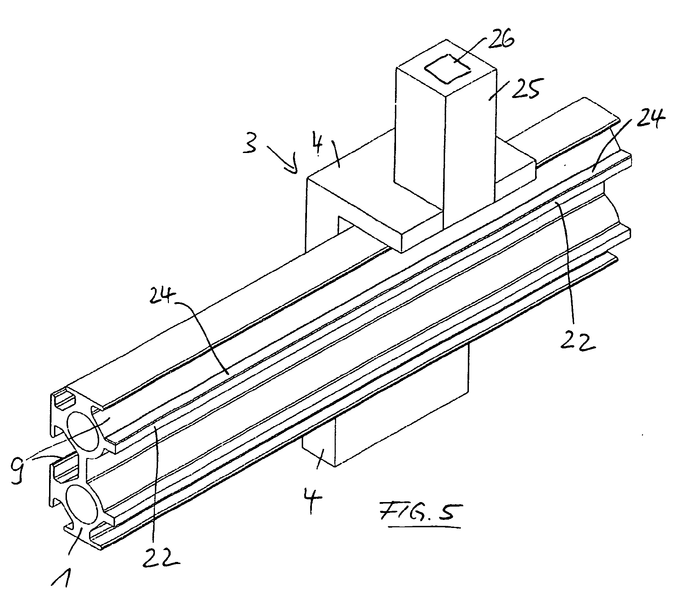

In den Figuren ist die Erfindung anhand mehrerer bevorzugter Ausführungsformen schematisch dargestellt, ohne auf diese Ausführungsformen beschränkt zu sein. Es wird darauf hingewiesen, dass nur die Figuren 4, 4A und 5 das erfindungsgemäße Verfahren veranschaulichen.

Es zeigt, jeweils in räumlicher Darstellung:
- Fig. 1: eine an der Tragstange angebrachte, aus zwei Klemmstücken bestehende Klemmeinrichtung mit in die Tragstange eingemessenem Target und mit einem der Klemmstücke verbundener Aufnahme für eine weitere Tragstange, zur Verwendung in einem Roboter-Greifersystem, veranschaulicht für ein Nonius-Messsystem,
- Fig. 2: ein gegenüber der Ausführungsform nach den Figuren 1 und 1a vereinfachtes Meßsystem unter Verwendung einer Skala-Strichanzeige, in einer Funktionsdarstellung, bei nicht in Deckung gebrachten Anzeigen von Klemmstück und Target,
- Fig. 2A: eine Darstellung gemäß Figur 2, veranschaulicht für die Soll-Position der Klemmeinrichtung
- Fig. 2B: eine Funktionsdarstellung gemäß Figur 2A, veranschaulicht für eine Ist-Position der Klemmeinrichtung,
- Fig. 3: eine Ausführungsform ähnlich der nach Figur 2, allerdings ohne eingemessenem Target, sondern unmittelbar auf die Tragstange aufgebrachter Skalierung,
- Fig. 4: eine Ausführungsform unter Verwendung einer auf die Klemmeinrichtung aufgesetzten elektronischen Meßeinheit mit Display, die mit einem Target zusammenwirkt, das mit einem Magnetstreifen versehen ist, veranschaulicht bei bezüglich der Tragstange eingemessenem Target und noch nicht positionierter Klemmeinrichtung,
- Fig. 4A: die Ausführungsform nach Figur 4 bei in Soll- oder Ist-Position positionierter Klemmeinrichtung,
- Fig. 5: eine Ausführungsform unter Verwendung der elektronischen Meßeinheit mit Display, allerdings ohne eingemessenem Target, wobei der Magnetstreifen unmittelbar auf die Tragstange aufgebracht ist.

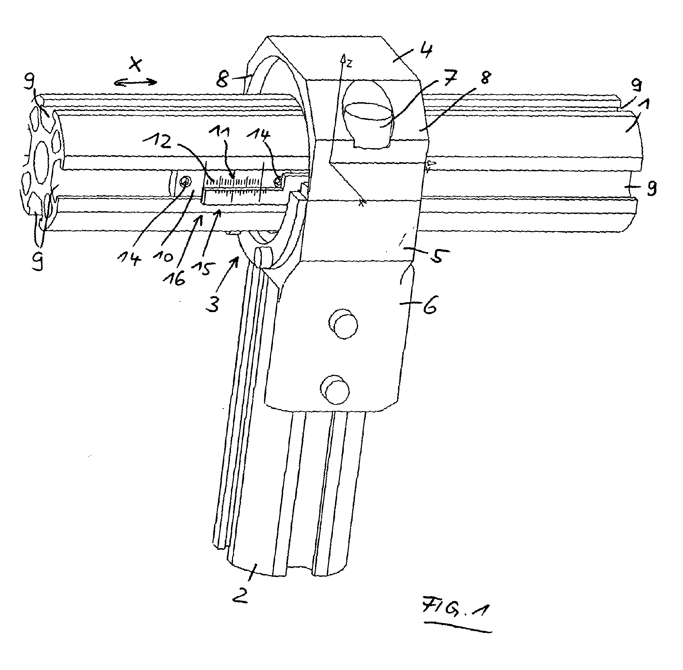

Figur 1 veranschaulicht die Verbindung zweier Tragstangen 1 und 2, wobei eine Klemmeinrichtung 3 zwei Klemmstücke 4 und 5 aufweist, die die vorliegende Erfindung betreffende Tragstange 1 klemmend umgreifen. Das eine Klemmstück 5 ist mit einer Aufnahme 6 für die Tragstange 2 versehen. Die Verbindung der Klemmstücke 3 und 4 erfolgt mittels zweier Schrauben 7, die die Schenkel 8 der im Aufnahmebereich der Tragstange 1 halbschalenartig ausgebildeten Klemmstücke 4 und 5 durchsetzen. Bei nicht angezogenen Schrauben 7 lässt sich die Klemmeinrichtung 3 in Längsrichtung X gemäß Doppelpfeil auf der Tragstange 1 hin und her verschieben. Diese Tragstange 1 und die Tragstange 2 sind im wesentlichen als achteckige Hohlprofile mit vier hinterschnittenen Nuten 9 ausgebildet.

Der in Figur 1 veranschaulichte Bereich bildet einen Knotenpunkt einer Trageinrichtung, die durchaus aus weiteren Tragstangen und Klemmeinrichtungen gebildet ist. Das der Tragstange 1 abgewandte Ende der Tragstange 2 nimmt beispielsweise eine Greifeinrichtung auf. Die Tragstange 1 bzw. die aus den diversen Tragstangen und Klemmeinrichtungen gebildete Trageinrichtung ist an einem Roboterarm befestigt. Selbstverständlich können in den Tragstangen die unterschiedlichsten Werkzeuge gelagert sein, beispielsweise neben den genannten Greifeinrichtungen Spann-, Saugeinrichtungen oder sonstige Hilfsmittel, wie Ventile, Sensoren oder dergleichen.

Charakteristisch ist für die Ausführungsform gemäß der Figur 1, dass in eine der Nuten 9, insbesondere eine der beiden Nuten 9, die dem Verbindungsbereich der beiden Klemmstücke 4 und 5 zugewandt ist, ein Target 10 in Art einer Justierleiste eingesetzt ist. Die Breite des Target 10 ist so bemessen, dass es mit geringem Spiel in die Nut 9 eingesetzt werden kann und insofern in Längsrichtung der Nut 9 geführt verschiebbar ist. Das Target 10 ist mit einer Skalierung 11 versehen, wobei die in gleichem Abstand zueinander angeordneten Striche 12 der Skalierung 11 senkrecht zur Längserstreckung der Nut 9 verlaufen. Das Target 10 ist in Abstand zu den Enden des Target 10 mit Gewindebohrungen 14a versehen. In diese sind Madenschrauben 14 eingeschraubt. Bei gelösten Madenschrauben lässt sich das Target 10 relativ zur Tragstange 1 entsprechend der errechneten Position der Klemmeinrichtung 3 in einer IstStellung positionieren und wird in dieser durch Anziehen der Schrauben 14 in der hinterschnittenen Nut 9 verspannt. Die Ausrichtung der Klemmeinrichtung 3 bezüglich des justierten Target 10 erfolgt mittels einer Noniusanzeige 15, die in Längsrichtung der Nut 9 orientiert ist und mit dem Klemmstück 4 verbunden ist. Entsprechend der Noniusanzeige bei einer Schieblehre kann somit die Klemmeinrichtung 3 sehr genau bezüglich des eingemessenen Target 10 in Längsrichtung der Tragestange 1 positioniert werden, und zwar mit einer Genauigkeit, die ein Bruchteil des Abstandes zweier Striche 12 der Skalierung 11 beträgt.

Bei dieser Ausführungsform ist somit das Meßsystem 16 zum Erfassen diverser relativer Stellungen von Klemmeinrichtung 3 und Tragestange 1 durch die Skalierung 11 und die Noniusanzeige 15 gebildet. - Zum Erreichen der Ist-Position wird die Klemmeinrichtung 3 soweit auf der Tragstange 1 verschoben bis der Referenzstrich der Noniusanzeige 15 exakt mit einem Referenzstrich der Skalierung 11 verläuft.

Ist es erforderlich, die Klemmeinrichtung 3 relativ zur Tragstange 1 in einer von der vorberechneten Ist-Position abweichenden Soll-Position zu positionieren läßt sich dieses abweichende Maß einfach mittels der Noniusanzeige 15 einmessen bzw. eine abweichende eingestellte Position von Klemmeinrichtung 3 und Tragstange 1 ablesen.

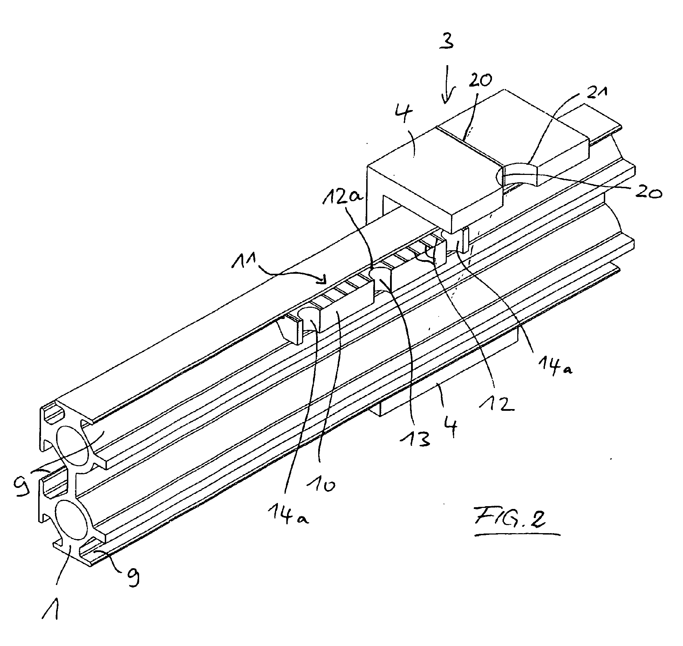

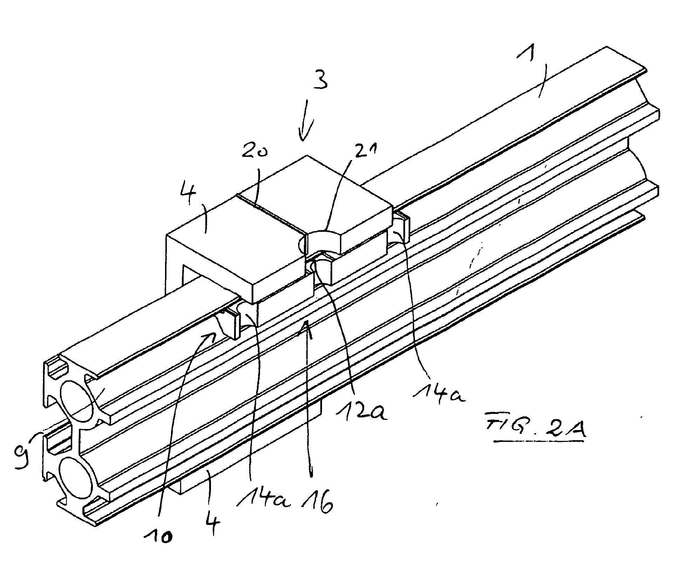

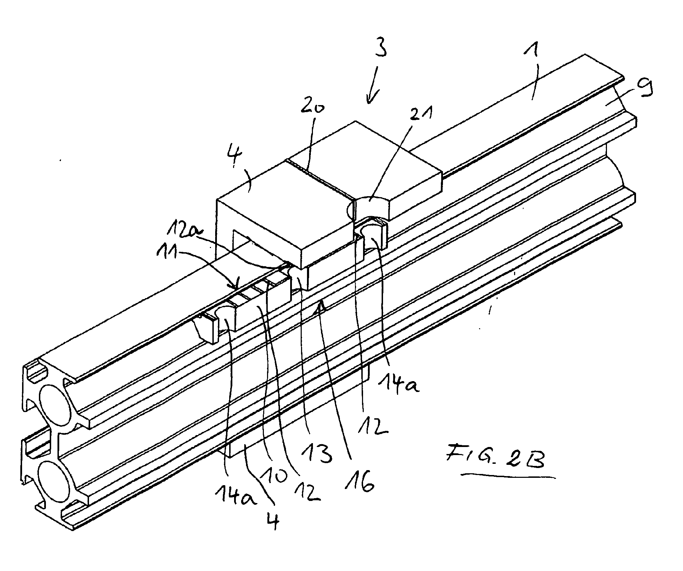

Die nachfolgenden Figuren betreffen einfache Funktionsdarstellungen von Modifizierungen der zuvor beschriebenen Anordnung von Tragstange 1 und Klemmeinrichtung 3 zwecks positionieren dieser Teile zueinander. Die Figuren zeigen einen Teilschnitt der Tragstange 1 und des einen Klemmstückes 4 zur Veranschaulichung des unterschiedlichen Aufbaus und der unterschiedlichen Wirkungsweise der Ausführungsformen:
Bei der Ausführungsform nach den Figuren 2, 2A und 2B weist das bezüglich der Tragstange 1 eingemessene Target 10, wie bei der Ausführungsform nach der Figur 1, eine Skalierung 11 auf. Mit dieser wirkt aber keine Noniusanzeige zusammen, sondern eine Strichanzeige in Art eines auf die Oberfläche des Klemmstückes 4 aufgebrachten, quer zur Längserstreckung der Tragstange verlaufenden Striches 20, der bis zu einem zentralen Loch 21 im Klemmstück 4 reicht, das aufgrund des Teilschnittes als Halbrund dargestellt ist. Der Durchmesser des Loches 21 ist größer als der Durchmesser eines Loches 13 im Target 10. Der Strich 20 reicht bis in das Loch 21 hinein, ist somit in axialer Richtung des Loches 21 angeordnet. - Figur 2 veranschaulicht das aus dem Bereich der Skalierung 11 herausgeschobene Klemmstück 4. In Figur 2A ist die eingemessene Soll-Position verdeutlicht, in der der Strich 20 des Klemmstückes 4 mit dem zentralen 0-Strich 12a der Skalierung fluchtet. Dieser 0-Strich 12a ist auf Höhe des Mittelpunktes des Loches 13 angeordnet. Figur 2B veranschaulicht eine abweichende Soll-Position des Klemmstückes 4, und damit der Klemmeinrichtung 3, in der der Strich 20 des Klemmstückes 4 mit einem Strich 12 der Skalierung 11 fluchtet, der einige Striche vom 0-Strich 12a entfernt ist. Die Genauigkeit dieses durch die Skalierung 11 und dem Strich 20 gebildeten Meßsystems 16 ist geringer als die nach der Ausführungsform gemäß Figur 1 unter Verwendung einer Noniusanzeige 15.

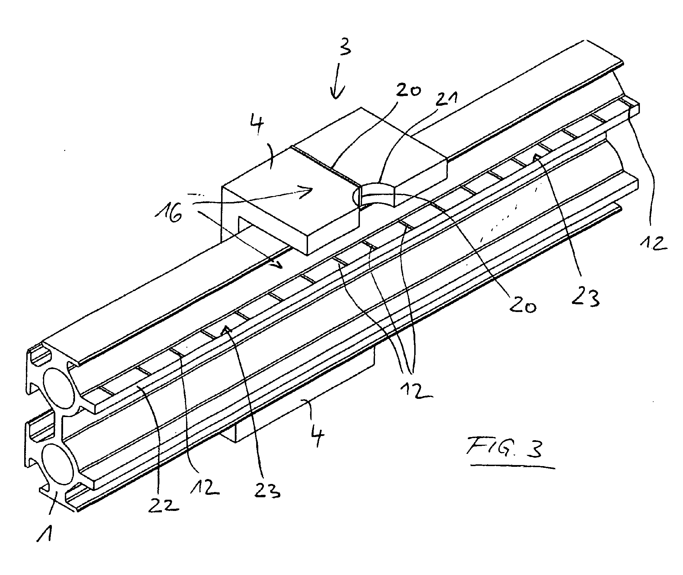

Die Ausführungsform gemäß Figur 3 unterscheidet sich von derjenigen nach den Figuren 2, 2A und 2B dadurch, dass in die Tragstange 1 kein Target 10 eingemessen ist, sondern in Längsrichtung der Tragstange 1 verlaufend auf den Steg 22 der Tragstange 1 unmittelbar eine Skalierung 23 mit Strichen 12 aufgebracht ist. Das Meßsystem 16 ist somit durch die Skalierung 21 und den Strich 20 des Klemmstückes 4 gebildet. Bei dieser Ausführungsform lässt sich somit eine Absolutposition von Klemmeinrichtung 3 und Tragstrange 1 einmessen und/oder ablesen im Gegensatz zu den Ausführungsformen nach den Figuren 1, 2, 2A und 2B, bei denen diese Position im Bezug zu dem im System eingemessenen Target 10 eingemessen und abgelesen werden kann.

Die Ausführungsform nach den Figuren 4 und 4A unterscheidet sich insbesondere von derjenigen nach der Figur 2 dadurch, dass die Position von Klemmeinrichtung 3 und Tragstange 1 elektronisch gemessen wird. Bei der Ausführungsform nach den Figuren 4 und 4A ist das eingemessene Target 10 nicht mit einer Skalierung versehen, sondern auf der Oberseite mit einem Magnetstreifen 24 und es ist auf das Klemmstück 4 eine elektronische Meßeinheit 25 mit Display 26 aufgesetzt, die beim Verschieben der Klemmeinrichtung 3 und damit des Klemmstückes 4 dessen Position zur Tragstange 1 aufgrund des variablen Magnetfeldes des Magnetstreifens 24 ausliest und auf dem Display 26 darstellt. - Figur 4 veranschaulicht das Klemmstück 4 in einer Position gemäß Figur 2, Figur 4A das Klemmstück in einer Position gemäß Figur 2A; die letzt genannte Position stellt die Soll-Position der Klemmeinrichtung 3 dar.

Auch die Ausführungsform nach Figur 5 arbeitet elektronisch. Im Unterschied zu der Ausführungsform nach der Figur 4 und entsprechend der Ausführungsform nach Figur 3 ist bei der Ausführungsform nach der Figur 5 kein eingemessenes Target 10 vorgesehen, sondern es ist der Magnetstreifen 24 unmittelbar, entsprechend der Skalierung 23, auf den Steg 22 der Tragstange 1 aufgebracht. Die elektronische Messeinheit 25 ermittelt bei dieser Ausführungsform somit die Relativposition des Klemmstückes 4 unmittelbar zur Tragstange 1.

Es ist insbesondere vorgesehen, dass die elektronische Messeinheit 25 die Schnittstelle zu einem Computer oder dergleichen darstellt, an den die gemessenen Daten kabellos, beispielsweise per Funk übertragen werden. Vorzugsweise ist die elektronische Messeinheit 25 nicht fest mit dem Klemmstück 4 verbunden, sondern kann geführt, somit präzise in eine Öffnung 27 des Klemmstückes 4 zur Vornahme der Messung eingesetzt werden. Nach der Messung wird die elektronische Messeinheit 25 wieder vom Klemmstück 4 getrennt.

Bezüglich der Verfahrensschritte zum Positionieren der Klemmeinrichtung 3 bezüglich der Tragstange 1 beim elektronischen Verfahren gemäß den Ausführungsformen nach den Figuren 4 und 5 wird auf die Ausführungen der Erfindungsbeschreibung vor der Erörterung der Figuren verwiesen.

## Patentansprüche

1. Verfahren zum Positionieren einer Klemmeinrichtung (3) an einer Tragstange (1) bei einem Roboter, wobei die gelöste Klemmeinrichtung relativ zur Tragstange in deren Längsrichtung (X) verschiebbar und in einer bestimmten Stellung mit der Tragstange verspannbar ist, sowie ein Meßsystem (16) zum Erfassen diverser relativer Stellungen von Klemmeinrichtung und Tragstange vorgesehen ist, **dadurch gekennzeichnet, dass** das Einmessen und/oder Abfragen der Position von Tragstange und Klemmeinrichtung elektronisch erfolgt.

2. Verfahren nach Anspruch 1, **dadurch gekennzeichnet, dass** das Meßsystem die relativen Stellungen von Klemmeinrichtung und Tragstange kontaktlos erfasst.

3. Verfahren nach Anspruch 1 oder 2, **dadurch gekennzeichnet, dass** mittels des Meßsystems die Absolutposition von Klemmeinrichtung und Tragstange oder die Position von einem im System von Klemmeinrichtung und Tragsystem eingemessenen Target (10) ermittelt wird.

4. Verfahren nach einem der Ansprüche 1 bis 3, **dadurch gekennzeichnet, dass** eine mit der Klemmeinrichtung verbundene elektronische Meßeinheit (25), insbesondere eine Meßeinheit mit Display (26), die Relativposition zur Tragstange mißt.

5. Verfahren nach Anspruch 4, **dadurch gekennzeichnet, dass** die Messung der Position von Tragstange oder in diesem eingemessenen Target mittels der Meßeinheit induktiv oder optisch erfolgt.

6. Verfahren nach einem der Ansprüche 1 bis 5, **dadurch gekennzeichnet, dass** die vom Meßsystem ermittelten Daten an einen Auswertecomputer weitergeleitet und in diesem gespeichert werden.

7. Verfahren nach einem der Ansprüche 1 bis 6, **dadurch gekennzeichnet, dass** aus den ermittelten Messdaten ein Meß- und/oder Abweichungsprotokoll erstellt wird.

## Claims

1. Method of positioning a clamping device (3) on a supporting rod (1) at a robot, wherein the released clamping device can be displaced relative to the supporting rod in its longitudinal direction (X) and can be restrained in a specific position together with the supporting rod, and a measuring system (16) for detecting diverse relative positions of clamping device and supporting rod is provided, **characterized in that** the position of supporting rod and clamping device is calibrated and/or scanned electronically.

2. Method according to Claim 1, **characterized in that** the measuring system detects the relative positions of clamping device and supporting rod in a non-contacting manner.

3. Method according to Claim 1 or 2, **characterized in that** the absolute position of clamping device and supporting rod or the position of a target (10) calibrated in the system of clamping device and supporting rod is determined by means of the measuring system.

4. Method according to one of Claims 1 to 3, **characterized in that** an electronic measuring unit (25) connected to the clamping device, in particular a measuring unit having a display (26), measures the relative position with respect to the supporting rod.

5. Method according to Claim 4, **characterized in that** the measuring of the position of supporting rod or target calibrated in said supporting rod is effected inductively or optically by means of the measuring unit.

6. Method according to one of Claims 1 to 5, **characterized in that** the data determined by the measuring system are transmitted to an evaluating computer and stored in the latter.

7. Method according to one of Claims 1 to 6, **characterized in that** a measurement and/or deviation report is prepared from the determined measurement data.

## Revendications

1. Procédé pour positionner un dispositif de serrage (3) sur une barre porteuse (1) d'un robot, le dispositif de serrage desserré pouvant coulisser par rapport à la barre porteuse dans sa direction longitudinale (X) et pouvant être serré dans une position définie avec la barre porteuse, un système de mesure (16) étant prévu pour détecter diverses positions relatives du dispositif de serrage et de la barre porteuse, **caractérisé en ce que** la mesure et/ou l'interrogation de la position de la barre porteuse et du dispositif de serrage s'effectuent électroniquement.

2. Procédé selon la revendication 1, **caractérisé en ce que** le système de mesure détecte sans contact les positions relatives du dispositif de serrage et de la barre porteuse.

3. Procédé selon la revendication 1 ou 2, **caractérisé en ce que** l'on détermine au moyen du système de mesure la position absolue du dispositif de serrage et de la barre porteuse ou la position d'une cible (10) mesurée dans le système du dispositif de serrage et de la barre porteuse.

4. Procédé selon l'une quelconque des revendications 1 à 3, **caractérisé en ce qu'**une unité de mesure électronique (25) connectée au dispositif de serrage, en particulier une unité de mesure avec un affichage (26), mesure la position relative par rapport à la barre porteuse.

5. Procédé selon la revendication 4, **caractérisé en ce que** la mesure de la position de la barre porteuse ou de la cible mesurée dans celle-ci s'effectue au moyen de l'unité de mesure de manière inductive ou optique.

6. Procédé selon l'une quelconque des revendications 1 à 5, **caractérisé en ce que** les données déterminées par le système de mesure sont envoyées à un ordinateur d'analyse et sont mémorisées dans celui-ci.

7. Procédé selon l'une quelconque des revendications 1 à 6, **caractérisé en ce que** l'on crée un protocole de mesure et/ou d'écart à partir des données de mesure déterminées.
